(19) Europäisches Patentamt
European Patent Office
Office européen des brevets

(11) EP 0 904 552 B2

(12) NOUVEAU FASCICULE DE BREVET EUROPEEN

(45) Date de publication et mention de la décision concernant l'opposition:
**21.03.2007 Bulletin 2007/12**

(45) Mention de la délivrance du brevet:
**20.02.2002 Bulletin 2002/08**

(21) Numéro de dépôt: **97927248.1**

(22) Date de dépôt: **06.06.1997**

(51) Int Cl.:
***G01S 15/93*** *(2006.01)* ***G01S 17/93*** *(2006.01)*

(86) Numéro de dépôt international:
**PCT/FR1997/001004**

(87) Numéro de publication internationale:
**WO 1997/047991 (18.12.1997 Gazette 1997/54)**

# (54) DISPOSITIF ET PROCEDE DE MESURE DE CRENEAUX DE STATIONNEMENT D'UN VEHICULE AUTOMOBILE

VERFAHREN UND VORRICHTUNG ZUM MESSEN VON PARKLÜCKEN FÜR FAHRZEUGE

DEVICE AND METHOD FOR MEASURING PARKING GAPS FOR A MOTOR VEHICLE

(84) Etats contractants désignés:
**DE ES GB IT**

(30) Priorité: **11.06.1996 FR 9607200**

(43) Date de publication de la demande:
**31.03.1999 Bulletin 1999/13**

(73) Titulaire: **Renault s.a.s.**
**92100 Boulogne Billancourt (FR)**

(72) Inventeurs:
- **HAMIDI, Massoud**
  **F-92380 Garches (FR)**
- **PALMIER, Anne-Marie**
  **F-94130 Nogent-sur-Marne (FR)**

(74) Mandataire: **Davies, Owen Robert Treharne et al**
**RENAULT TECHNOCENTRE**
**Département Propriété Intellectuelle**
**Sce 00267 TCR GRA 2 36**
**1, avenue de Golf**
**78288 Guyancourt cedex (FR)**

(56) Documents cités:
**EP-A- 0 305 907**
**DE-A- 3 813 083**
**DE-A- 3 833 022**
**DE-A- 4 005 444**
**DE-A- 4 303 066**
**FR-A- 2 728 972**
**FR-A- 2 732 493**
**GB-A- 2 289 816**
**US-A- 5 463 384**

- **PATENT ABSTRACTS OF JAPAN vol. 007, no. 146 (P-206), 25 juin 1983 & JP 58 058483 A (NISSAN JIDOSHA KK), 7 avril 1983,**
- **PATENT ABSTRACTS OF JAPAN vol. 018, no. 424 (M-1652), 9 août 1994 & JP 06 127318 A (NISSAN MOTOR CO LTD), 10 mai 1994,**



Printed by Jouve, 75001 PARIS (FR)

## Description

La présente invention se rapporte au domaine technique de la mesure de créneaux de stationnement par détection d'un emplacement libre.

On connaît dans l'état de la technique, des dispositifs du type de ceux utilisés par différents constructeurs automobiles. Ces dispositifs ont en commun le fait qu'un ou plusieurs capteurs de proximité sont placés sur le flanc du véhicule, à hauteur des pare-chocs. Ces capteurs sont pourvus d'un émetteur qui envoie un faisceau de mesure, sous la forme d'un signal infrarouge ou ultrasonore, en direction des véhicules stationnés, et de moyens pour analyser le signal renvoyé. Ainsi positionnés, ces capteurs visent donc horizontalement pour détecter le flanc des véhicules déjà stationnés. Plus précisément:

1) le faisceau de mesure émis par le capteur suit le profil d'un premier véhicule stationné, jusqu'au bout de son pare-chocs. En conséquence, le capteur génère un signal de PRESENCE à un premier niveau, par exemple PRESENCE = 1;

2) au bout du pare-chocs, le capteur détecte une absence de véhicule stationné et génère un signal de PRESENCE au niveau inverse, soit PRESENCE = 0, correspondant à un emplacement vide,

3) et enfin le capteur détecte le pare-chocs du véhicule suivant stationné dans la file, et le signal de PRESENCE repasse au niveau 1.

L'odomètre associé au système de capteur permet de mesurer la longueur de l'espace libre représenté par le signal PRESENCE = 0.

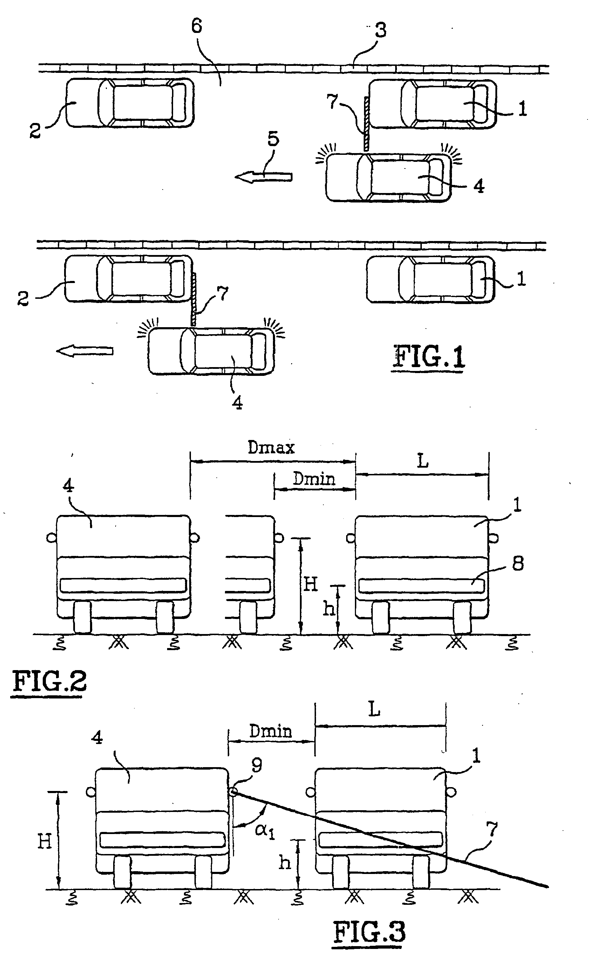

Ce fonctionnement connu est décrit en relation à la figure 1. La partie supérieure de la figure montre deux véhicules 1, 2 stationnés dans une file par exemple le long d'un trottoir 3, et un véhicule 4 en mouvement dans la direction indiquée par la flèche 5 et cherchant à se garer dans l'emplacement libre 6 disponible entre les véhicules 1 et 2. Un faisceau de mesure 7 est émis perpendiculairement par rapport à l'axe longitudinal du véhicule 4 à partir d'un dispositif de mesure non représenté, situé à bord du véhicule 4. La partie inférieure de la figure 1 montre le véhicule 4 arrivé dans une position où le faisceau de mesure 7 touche le pare-chocs arrière du véhicule 2. La mesure de la longueur de l'espace libre à l'aide de l'odomètre du véhicule 4 commence dès que le dispositif de mesure ne détecte plus le pare-chocs avant du véhicule 1, et s'arrête dès qu'on détecte le pare-chocs arrière du véhicule 2. Si la longueur ainsi mesurée est supérieure à une valeur prédéfinie, une interface homme-machine du dispositif de mesure génère un signal, notamment visuel ou auditif, indiquant au conducteur que l'espace libre détecté est suffisant pour garer son véhicule.

Un tel dispositif selon l'état de la technique comporte un certain nombre d'inconvénients, liés à la variabilité de la géométrie et de la photométrie des pare-chocs de véhicules. En effet, la mesure du créneau de stationnement sera d'autant plus précise que le capteur arrivera à détecter l'extrême bout des pare-chocs. Or ceux-ci sont de formes, d'aspects et de hauteurs très variables, la conséquence étant que le signal reçu par le capteur est dans certains cas très faible, voire nul. De plus, le capteur visant horizontalement, il peut détecter un arrière-plan (un mur ou une haie par exemple) en l'absence de véhicule, ce qui peut générer un « bruit de fond ». De ce fait, le capteur réagit comme s'il avait détecté un véhicule, ce qui entraîne des mesures erronées. En outre, dans les dispositifs de mesure du type précité, le niveau du signal de mesure réfléchi, et par conséquent la performance du dispositif, dépendent d'un grand nombre de facteurs mal maîtrisés, comme le pouvoir réfléchissant des carrosseries et des pare-chocs, qui dépend lui-même de la couleur du véhicule, de son type de peinture, et de son niveau de propreté.

Par le Patent Abstracts of Japan vol 007 no 146, JP 58 05 84 83, on connaît un système d'aide au créneau comportant un capteur de proximité qui émet un faisceau en direction de la file de véhicules en stationnement, et un capteur de vitesse associé au capteur de proximité de façon à évaluer la longueur de la place libre, et à apprécier si elle est suffisante pour le parking.

Toutefois un tel système n'est pas fiable en raison de la variété de la géométrie et de la luminosité des pare-chocs, et du fait qu'un capteur orienté horizontalement peut confondre un objet posé sur le sol et un véhicule en stationnement.

DE 38 13 083 est un aide au parking automatique qui détecte les obstacles à côté d'un véhicule pendant une opération de stationnement.

US 5 463 384 est un système pour éviter les collisions entre véhicules qui émet plusieurs faisceaux pour détecter les objets dans une zone.

DE 38 33 022 est un système anti-collision pour des véhicules sans pilote

DE 43 03 066 est un aide au parking pour détecter une distance minimum pendant une manoeuvre de stationnement.

Par conséquent, l'invention a pour but de proposer un dispositif de mesure de créneaux de stationnement permettant de remédier aux inconvénients précités des dispositifs de mesure connus.

En particulier, la présente invention a pour but de proposer un dispositif dont les performances soient pratiquement indépendantes des caractéristiques des pare-chocs ou des carrosseries des véhicules déjà stationnés, ou de l'arrière-plan.

A cet effet, l'invention concerne un dispositif de mesure de créneaux de stationnement pour véhicule automobile, comme défini dans la revendication 1 ou 2.

De façon avantageuse, un seuil S prédéterminé est calculé à partir de la longueur du véhicule à garer et d'une longueur correspondant à une marge de manoeuvre nécessaire pour garer le véhicule.

Le principe de la solution selon l'invention consiste donc à viser le sol à l'aide d'un ou de plusieurs faisceaux de mesure au lieu des flancs des véhicules, pour déterminer l'existence d'un emplacement de stationnement libre. En effet, il a été constaté que la géométrie et la photométrie des bitumes de chaussée sont beaucoup plus uniformes que ceux des pare-chocs ou des carrosseries. En outre, le dispositif peut être dimensionné et configuré pour détecter avec une très grande fiabilité soit un véhicule soit le sol, sans rencontrer de problèmes de « bruit de fond ».

Le faisceau de mesure émis par le capteur de proximité est un faisceau unique relativement fin, animé d'un mouvement de balayage sensiblement vertical, ou le faisceau de mesure émis par le capteur de proximité comporte plusieurs faisceaux fins fixes situés dans un même plan vertical.

Selon d'autres caractéristiques du dispositif selon l'invention:

- le capteur de proximité est placé en hauteur sur le véhicule équipé, de préférence à une hauteur comprise entre 50 m et 100 cm par rapport au sol.
- par exemple, le capteur de proximité est placé sur au moins un rétroviseur extérieur du véhicule équipé.
- le faisceau de mesure est orienté vers le sol de façon à intercepter les pare-chocs des véhicules stationnés, ou bien le sol au niveau de la file de stationnement en l'absence de véhicule stationné.
- en outre, le faisceau de mesure est émis de façon sensiblement perpendiculaire à l'axe longitudinal du véhicule équipé.

L'invention sera mieux comprise en se référant à la description suivante faite à titre d'exemple non limitatif et aux dessins ci-annexés, dans lesquels:

- la figure 1 représente en vue de dessus le principe de détection d'un emplacement de stationnement libre, conforme à l'état de la technique;
- la figure 2 représente une vue en élévation d'un véhicule stationné et d'un véhicule en recherche de stationnement, représenté dans deux positions extrêmes d'éloignement par rapport au véhicule stationné;
- la figure 3 représente une vue en élévation du principe de la visée du sol à partir d'un véhicule équipé d'un dispositif de mesure selon l'invention;
- la figure 4 représente un dispositif de mesure émettant un faisceau large unique en direction de la file de véhicules stationnés;
- la figure 5 représente un mode de réalisation de l'invention, dans lequel le dispositif de mesure est pourvu d'un émetteur à faisceau fin unique animé d'un mouvement de balayage;
- la figure 6 représente un autre mode de réalisation de l'invention, dans lequel le dispositif de mesure est pourvu d'un émetteur à faisceaux fins multiples fixes;
- la figure 7A représente un graphe de la longueur du faisceau émis par le dispositif de mesure selon la figure 5, en fonction de l'angle d'émission du faisceau de mesure, le véhicule équipé se trouvant à une première distance de la file de stationnement;
- la figure 7B est graphe analogue à celui de la figure 7A, obtenu lorsque le véhicule stationné se trouve à une seconde distance de la file de stationnement;
- la figure 8 est un organigramme d'un procédé de traitement des longueurs de faisceaux mesurées par le dispositif de mesure à trois faisceaux selon la figure 6, permettant de déterminer si un emplacement de stationnement libre de longueur suffisante a été détecté.
- la figure 9 représente un graphe des distances mesurées par le dispositif de mesure à un seul faisceau, en fonction de la hauteur du capteur par rapport au sol, et de la distance entre le véhicule équipé du dispositif et la file stationnée.

On va maintenant décrire de façon plus détaillée un exemple de réalisation de l'invention, sans que cette réalisation ne présente un caractère limitatif. En particulier, les données numériques employées dans l'exemple décrit ci-après sont des moyennes issues de statistiques expérimentales sur une quarantaine de véhicules correspondant aux véhicules les plus courants du parc automobile.

L'invention consiste de façon générale à émettre à partir du véhicule à garer, de préférence perpendiculairement au véhicule, un faisceau de mesure en direction de la file de véhicules déjà stationnés, ce faisceau de mesure étant en outre sensiblement dirigé vers le sol, de façon à intercepter la carrosserie et les pare-chocs d'un véhicule si un véhicule est garé au droit du véhicule en mouvement, ou à intercepter le sol au cas ou aucun véhicule n'est stationné au droit du véhicule en mouvement.

Afin de déterminer si un véhicule est déjà stationné, l'invention consiste à mesurer la longueur du faisceau jusqu'à l'obstacle renvoyant le faisceau de mesure. Si cette distance est inférieure à un premier seuil prédéterminé, on en déduit qu'un véhicule est déjà stationné. Si au contraire la distance mesurée est supérieure à ce premier seuil, cela signifie que le faisceau a frappé le sol, et qu'il n'y a pas de véhicule stationné, c'est-à-dire que l'emplacement est libre. Il reste alors à s'assurer que la longueur de l'emplacement libre est suffisante pour garer le véhicule équipé. Pour cela, on mesure, notamment grâce à l'odomètre du véhicule couplé au capteur de proximité, la longueur de l'emplacement libre en déterminant de façon continue la distance pendant laquelle persiste l'indication d'absence de véhicule stationné. Dès que cette distance devient supérieure à un second seuil prédéterminé correspondant à la longueur du véhicule à garer augmenté d'une certaine marge de manoeuvre, on en déduit que l'emplacement libre correspondant permet de garer le véhicule.

Pour mesurer la longueur du faisceau de mesure, on utilise un capteur de proximité incorporant un télémètre. On ne décrira pas en détail la technologie du télémètre, qui est connue en soi. Il peut notamment s'agir d'un télémètre à ultrasons ou d'un télémètre à infrarouge, et dans chaque cas, il existe plusieurs façons de mesurer une distance. L'homme du métier choisira aisément la technologie de télémètre en fonction de la finesse de la mesure que l'on veut effectuer, de l'encombrement global défini pour le capteur, ou du coût fixé pour la prestation.

De même, on ne considérera dans l'exemple décrit qu'un mode de réalisation à un seul capteur de détection de créneaux de stationnement. Il sera aisément possible d'équiper le véhicule de deux capteurs pour une recherche de créneaux de stationnement à gauche et à droite de la voie. Les dessins ne font apparaître des capteurs que d'un seul côté du véhicule, par mesure de simplification.

En outre, on considère que les files ayant des emplacements de stationnement sont contiguës à une seule largeur de voie de circulation, ce qui fixe les limites théoriques de distance latérale entre le véhicule équipé de capteurs et la file de stationnement.

Enfin, l'exemple décrit suppose que le télémètre est placé au niveau du rétroviseur. Il peut bien entendu être positionné à tout autre emplacement permettant de détecter à la fois les pare-chocs des véhicules déjà stationnés et le sol devant ceux-ci.

On se réfère maintenant à la figure 2. Dans cette figure, on a représenté un véhicule 1 stationné dans une file de stationnement, et un véhicule 4 se déplaçant sur une voie contiguë à la file de stationnement, et équipé d'un dispositif de mesure selon l'invention. Le véhicule 4 est représenté en trait plein dans une position d'écart maximal Dmax par rapport au véhicule 1, et en trait interrompu dans une position d'écart minimal Dmin par rapport au véhicule 1, étant entendu que la position réelle d'un véhicule 4 sera en pratique toujours intermédiaire par rapport à ces deux positions extrêmes. On désigne par ailleurs par L la largeur du véhicule stationné, H la hauteur par rapport au sol du rétroviseur du véhicule 1 équipé du capteur de proximité, h la hauteur moyenne des pare-chocs 8 des véhicules par rapport au sol. A titre d'exemple pratique, on posera L = 170 cm, H = 100 cm, h = 50 cm, Dmin = 30 cm et Dmax = 150 cm.

Il est évident que quelle que soit la distance D du véhicule équipé 4 par rapport à la file de stationnement, le capteur doit détecter la pointe extrême du pare-chocs 8 du véhicule stationné 1. La connaissance de l'angle sous lequel le capteur voit le bout du pare-chocs en son milieu, lorsque le véhicule équipé 1 est à la distance Dmin ou Dmax de la file de stationnement, permet d'avoir le champ utile du capteur disposé au niveau du rétroviseur 9.

Si $\alpha$ est l'angle du faisceau émis par le capteur par rapport à la verticale et D la distance entre le véhicule équipé et la file de stationnement, on a :

$$\alpha = \text{Arctan}[(D + L/2)/H\text{-}h]$$

Comme représenté en figure 3, pour D = Dmin, on aura $\alpha_1$ = Arctan[(Dmin + L/2)/H-h] d'ou $\alpha_1$ = 66,5° et $\alpha_2$ = Arctan[(Dmax + L/2)/H-h] d'ou $\alpha_2$ = 78° avec les exemples numériques précités.

Le champ du capteur est alors $\phi = \alpha_2 - \alpha_1$, soit 11,5° dans l'exemple.

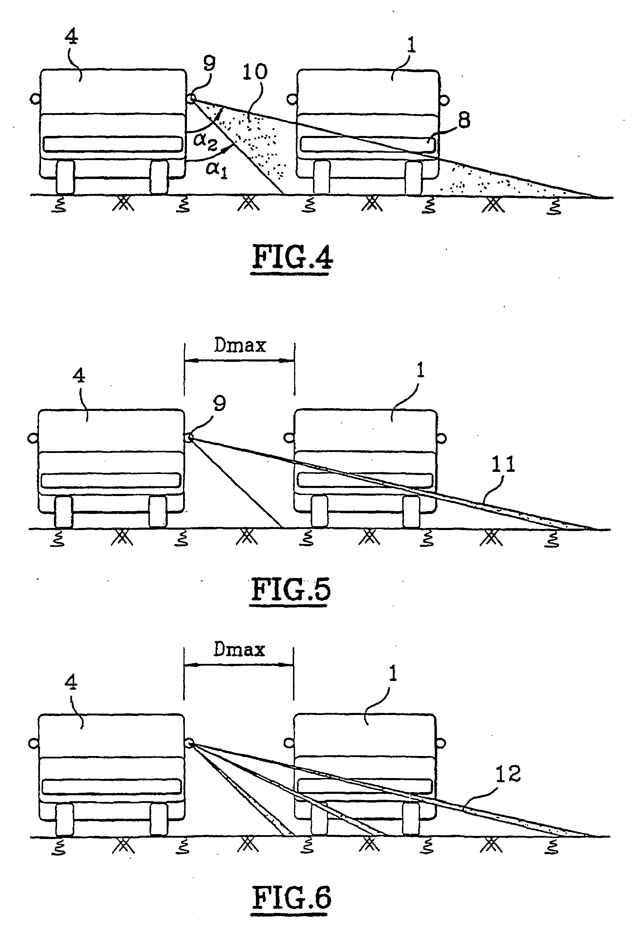

Pour couvrir un tel champ, plusieurs réalisations techniques sont possibles pour l'émetteur du faisceau de mesure, comme représenté dans les figures 4 à 6: un seul faisceau large, un faisceau fin animé d'un mouvement de balayage, ou bien plusieurs faisceaux fins fixes répartis convenablement dans le champ global du capteur pour permettre la finesse de détection désirée.

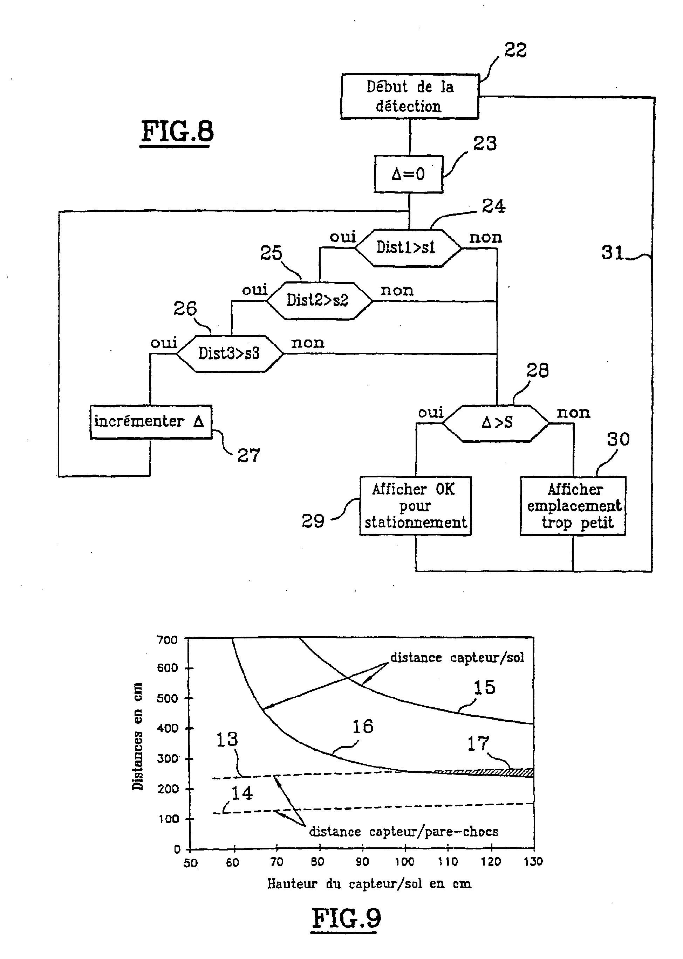

Si on se place dans le cas général d'un capteur positionné sur le véhicule à une certaine hauteur H et utilisant un certain champ angulaire, on constate qu'il peut exister une ambiguïté dans l'interprétation de la mesure fournie par le capteur, c'est-à-dire que si l'on ne se fie qu'à cette mesure, on ne pourrait pas savoir si la distance mesurée est représentative de la détection du sol ou de la détection d'un pare-chocs. Le problème est illustré dans la figure 9, dans laquelle on a représenté, pour deux distances extrêmes Dmin et Dmax telles que définies précédemment, d'une part la distance mesurée entre le capteur et le sol (courbe 13 pour D = Dmax et courbe 14 pour D = Dmin), en fonction de la hauteur H à laquelle est placé le capteur par rapport au sol, et d'autre part, la distance oblique mesurée entre le capteur et le sol (courbe 15 pour D = Dmax et courbe 16 pour D = Dmin).

On constate d'après ce graphe que pour un capteur situé à une hauteur de plus de 100 cm du sol, la distance oblique mesurée par le capteur a deux significations possibles, comme le montre la partie hachurée 17 du dessin. Un point dans cette zone 17 peut correspondre soit à une distance entre capteur et pare-chocs, soit à une distance entre capteur et le sol, en fonction de la distance latérale D du véhicule à la file de stationnement. Pour lever l'ambiguïté, on pourra par exemple:

- intégrer dans l'algorithme de détection de distance, la distance D en tant que facteur discriminant: soit le véhicule est assez proche de la file de stationnement (D est faible) et dans ce cas la distance mesurée par le capteur est représentative de la distance capteur-sol; soit le véhicule est assez éloigné de la file de stationnement et dans ce cas la distance mesurée est représentative de la distance entre capteur et pare-chocs.
- ou bien en variante, intégrer dans l'algorithme de détection le niveau analogique de signal réfléchi en direction du capteur: en effet, une cible proche renverra un signal de niveau plus élevé qu'une cible éloignée, toutes autres choses égales par ailleurs.

Cependant, la pratique montre que les albédos de réflexion des peintures de pare-chocs étant très variés, on pourrait se trouver dans un cas où un sol proche renverrait autant de signal qu'un pare-chocs plus éloigné.

Afin de lever l'ambiguïté dans l'interprétation de la mesure de distance avec un maximum de sûreté, il serait également possible de tenir compte des deux possibilités ci-dessus prises en combinaison.

On va maintenant décrire plusieurs exemples de réalisation du dispositif de mesure selon l'invention, utilisant des faisceaux de mesure de caractéristiques différentes.

Dans la figure 4, le capteur situé au niveau du rétroviseur 9 du véhicule 1 est choisi pour émettre un faisceau large unique 10. Ce faisceau est dirigé vers la file de stationnement et orienté vers le sol dans les limites des angles $\alpha_1$ et $\alpha_2$ précités. Cette configuration de faisceau a l'avantage d'être simple. Elle est obtenue à partir d'un dispositif de mesure comprenant un ou plusieurs émetteurs (non représentés) dans le capteur de proximité en fonction de la puissance d'émission désirée, une optique pour donner cette forme particulière au faisceau et couvrir le champ de détection désiré, et un récepteur.

Cependant ce mode possède dans certains cas l'inconvénient que, comme représenté dans la figure 9 décrite précédemment, une partie du pare-chocs 8 et une portion de sol peuvent se trouver en même temps dans le faisceau, d'où une ambiguïté difficile à lever quant à la présence ou non d'un véhicule 1 en stationnement. De plus, l'énergie émise est répartie sur une surface assez importante et donc le flux récupéré par le récepteur peut être assez faible, ce qui implique une détection difficile du faisceau réfléchi. Une telle configuration, bien qu'elle soit avantageuse par rapport aux dispositifs de l'état de la technique, n'est donc pas idéale.

Dans un mode de réalisation représenté en figure 5, on utilise un seul faisceau fin 11 animé d'un mouvement de balayage dans un plan sensiblement vertical pour couvrir l'intégralité du champ utile. Dans cette configuration, la détection du sol ou du pare-chocs est plus fiable que dans le cas précédent car le faisceau est fin donc plus sélectif.

La fréquence de balayage du faisceau fin 11 est fonction de la résolution souhaitée pour la mesure de l'espace libre. En effet, supposons que le véhicule équipé 1 longe la file de stationnement à une vitesse de 14 m/s, soit environ 50 km/h, ce qui est une valeur raisonnable pour la recherche d'une place de stationnement, On suppose de plus que le dispositif de mesure selon l'invention puisse mesurer la longueur L d'un espace libre avec une précision globale de 10 cm, tenant compte de la précision de détection par le capteur du début et de la fin de l'espace libre et de la précision de l'odomètre du véhicule. La fréquence de balayage du faisceau 11 doit donc être supérieure ou égale à f = 14/0,1 soit 140 Hz, ce qui correspond à une fréquence audible. Il en résulte que le dispositif selon la figure 5 est parfaitement fonctionnelle, mais présente l'inconvénient mineur de travailler dans le spectre des fréquences audibles.

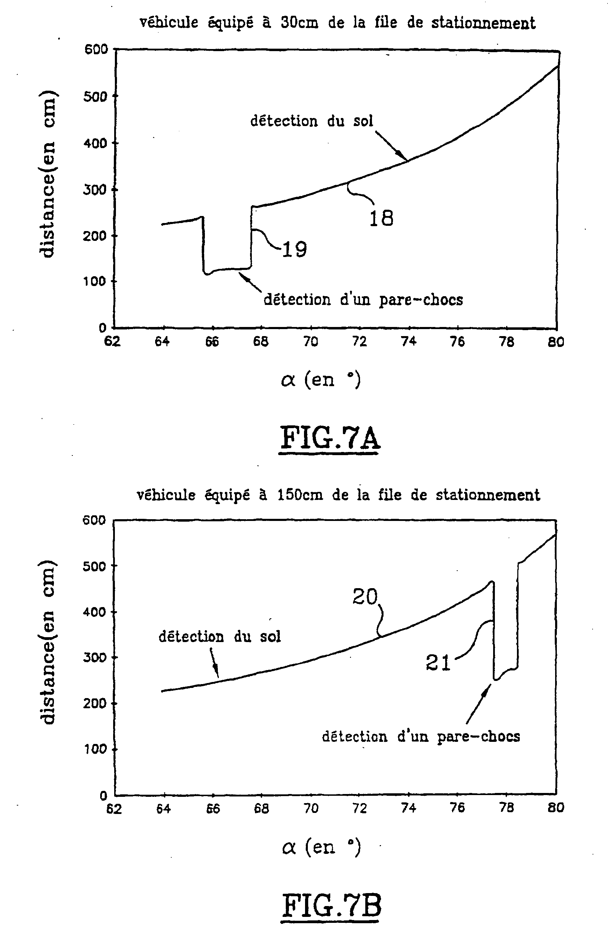

Comme représenté en figure 7, la détection d'un obstacle ou d'un véhicule stationné, à l'aide du dispositif à balayage selon la figure 5, se manifeste par une discontinuité nette dans la courbe représentant la longueur $\delta$ du faisceau de mesure réfléchi en fonction de l'angle $\alpha$ instantané du faisceau à balayage émis. En figure 7A, on a représenté ce graphe lorsque le véhicule équipé 4 se déplace à une distance Dmin = 30 cm de la file de stationnement. Dans ce cas, on détecte un pare-chocs de véhicule stationné, vu sous un angle d'environ 67°. Si le véhicule équipé du dispositif selon l'invention se déplace à une distance Dmax = 150 cm de la file de stationnement, le même pare-chocs sera détecté sous un angle d'environ 78°, comme le montre la discontinuité de la courbe représentée en figure 7B. Les zones des courbes en-dehors des discontinuités correspondent à la détection du sol par le faisceau, au fur et à mesure du déplacement du faisceau dû à son balayage vertical. Il est à noter qu'un seul des trajets verticaux aller-retour du faisceau de mesure (de $\alpha$ = 64° à $\alpha$ = 80°) est représenté dans chaque graphe. Il est clair que la représentation du trajet retour du faisceau (de $\alpha$ = 80° à $\alpha$ = 64°) serait symétrique par rapport à la position $\alpha$ = 80°.

Il est également à noter que si l'environnement des véhicules en stationnement est fortement bruité, la détection d'obstacles sans ambiguïté sera renforcée en intégrant dans l'algorithme de détection une mesure du niveau analogique du signal réfléchi reçu par le capteur du dispositif de mesure, et ce quelle que soit la géométrie du faisceau de mesure du capteur.

Un mode de réalisation du dispositif de mesure selon l'invention, qui constitue le mode de réalisation préféré de l'invention, est décrit en relation à la figure 6. Dans ce mode de réalisation, le dispositif de mesure est conçu pour émettre et recevoir plusieurs, par exemple trois faisceaux fins 12. Cette configuration présente l'avantage comme celle de la figure 5, d'avoir des faisceaux fins donc sélectifs. Le nombre de faisceaux choisi dépendra de la fiabilité avec laquelle on cherche à détecter la pointe extrême d'un pare-chocs. En effet, le champ utile de 11,5° défini précédemment permet d'avoir par exemple trois faisceaux positionnés respectivement à $\alpha_1$ = 66,5°, $\alpha_2$ = 72,25° et $\alpha_3$ = 78° pour couvrir tout le champ de détection. L'algorithme de détection est plus simple que dans le cas d'un faisceau mobile décrit précédemment. La hauteur H du capteur et l'angle de chaque faisceau permettent de calculer aisément une mesure de distance capteur/obstacle par faisceau. Si la distance D1, D2 ou D3 mesurée par un faisceau respectif est supérieure à un seuil respectif prédéterminé S1, S2, S3, on en déduit que le faisceau correspondant n'intercepte pas d'obstacle particulier et vient frapper le sol. Dans ce cas, le faisceau se trouve au droit d'une zone libre, dont il faut déterminer la longueur $\Delta$ à l'aide de l'odomètre couplé au capteur de proximité. Si au contraire la distance D1, D2 ou D3 mesurée par un faisceau respectif est inférieure au seuil respectif prédéterminé S1, S2, S3, on en déduit que le faisceau correspondant intercepte un obstacle, par exemple un élément de véhicule 1 stationné, ce qui signifie que le faisceau se trouve au droit d'une zone indisponible pour le stationnement. Des valeurs de seuil adéquates en fonction des valeurs de la distance S et de l'angle $\alpha$ données précédemment, peuvent être de l'ordre de: S1 = 150 cm, S2 = 200 cm et S3 = 300 cm.

Dans le cas où la mesure de distance S indique qu'il n'y a pas d'obstacle et que le véhicule équipé 4 se trouve au droit d'un emplacement de stationnement potentiel, il faut encore déterminer que cet emplacement est suffisamment long pour recevoir le véhicule 4. A cette fin, on utilise un algorithme de calcul, dont l'organigramme est représenté en figure 8 dans le cas où le dispositif de mesure utilise trois faisceaux comme représenté en figure 6. Les algorithmes de calcul pour les autres configurations de capteurs sont similaires et ne seront pas décrits en détail.

On désigne par $\Delta$ la longueur instantanée d'une zone détectée libre, et on désigne par S un seuil prédéterminé correspondant à la longueur minimale de zone libre nécessaire pour que le véhicule 4 puisse se garer dans cette zone. Bien évidemment, Ce seuil dépend de la longueur du véhicule à garer, et de la marge de manoeuvre souhaitée. L'algorithme de détection de créneau de stationnement comporte alors les étapes suivantes:

- au début 22,23 de la détection, on positionne la valeur de la longueur de zone libre $\Delta$ à zéro.
- en 24,25,26, on détermine ensuite successivement pour les différents faisceaux de mesure (trois faisceaux dans l'exemple) si la distance D1,D2,D3 mesurée respectivement par chacun des faisceaux est supérieure au seuil correspondant S1,S2,S3. Si la réponse est oui pour chaque faisceau de mesure, cela signifie qu'aucun faisceau n'a rencontré d'obstacle, et que chaque faisceau a exploré une zone libre.
- en conséquence, on incrémente en 27 la valeur de la longueur instantanée de zone libre $\Delta$ d'un incrément correspondant à une longueur inférieure ou égale à la résolution du dispositif de mesure.
- dès qu'au moins une des distances D1,D2,D3 mesurées est inférieure au seuil S1,S2,S3 respectif, on a atteint la limite de la zone libre courante, et on teste alors en 28 la valeur de $\Delta$ en la comparant au seuil S correspondant à la longueur de zone libre nécessaire pour pouvoir garer le véhicule. Si $\Delta$ est supérieure à S, on en déduit que la zone libre est déjà de longueur suffisante pour pourvoir garer le véhicule, et le dispositif émet en 29 un signal visuel ou auditif approprié à l'intention du conducteur.
- au contraire, si le test de $\Delta$ indique que l'emplacement est trop petit, le dispositif émet en 30 un signal indiquant au conducteur que l'emplacement est trop petit. On recommence alors en 31 le cycle de détection comme précédemment, sur une zone voisine sur le trajet du véhicule.

L'utilisation qui résulte du fonctionnement ci-dessus est particulièrement simple et efficace. Le conducteur n'a en pratique qu'à longer une file de stationnement à une distance et à une vitesse raisonnables, et à attendre que l'interface homme-machine du dispositif de mesure lui indique la présence d'un créneau de stationnement suffisant.

## Revendications

1. Dispositif de mesure de créneaux de stationnement destiné à équiper un véhicule automobile (4), comportant un capteur de proximité émettant un faisceau de mesure en direction d'une file de véhicules (1) en stationnement afin de détecter la présence ou l'absence d'un véhicule (1) à côté du véhicule équipé (4), et un odomètre couplé audit capteur de proximité pour mesurer la longueur d'un emplacement libre (6) séparant deux véhicules déjà stationnés, **caractérisé en ce que** le capteur de proximité est agencé de façon à émettre au moins un faisceau de mesure (7; 10; 11; 12) dirigé vers le sol au niveau de la file de véhicules en stationnement, de manière que le faisceau intercepte le véhicule (1) au cas où un véhicule (1) est stationné, ou bien le sol en cas d'absence de véhicule stationné, et **en ce que** le faisceau de mesure émis par le capteur de proximité comporte plusieurs faisceaux fins fixes (12) situés sensiblement dans un même plan vertical.

2. Dispositif de mesure de créneaux de stationnement destiné à équiper un véhicule automobile (4), comportant un capteur de proximité émettant un faisceau de mesure en direction d'une file de véhicules (1) en stationnement afin de détecter la présence ou l'absence d'un véhicule (1) à côté du véhicule équipé (4), et un odomètre couplé audit capteur de proximité pour mesurer la longueur d'un emplacement libre (6) séparant deux véhicules déjà stationnés, **caractérisé en ce que** le capteur de proximité est agencé de façon à émettre au moins un faisceau de mesure (7; 10; 11; 12) dirigé vers le sol au niveau de la file de véhicules en stationnement, de manière que le faisceau intercepte le véhicule (1) au cas où un véhicule (1) est stationné, ou bien le sol en cas d'absence de véhicule stationné, et **en ce que** le faisceau de mesure émis par le capteur de proximité est un faisceau unique fin (11), animé d'un mouvement de balayage sensiblement vertical.

3. Dispositif de mesure selon l'une des revendications 1 ou 2, **caractérisé en ce que** le capteur de proximité est placé en hauteur sur le véhicule équipé (4), de préférence à une hauteur comprise entre 50 cm et 100 cm par rapport au sol.

**4.** Dispositif de mesure selon l'une quelconque des revendications précédentes, **caractérisé en ce que** le capteur de proximité est placé sur au moins un rétroviseur extérieur (9) du véhicule équipé.

**5.** Dispositif de mesure selon l'une quelconque des revendications précédentes, **caractérisé en ce que** le faisceau de mesure (7;10;11;12) est orienté vers le sol de façon à intercepter les pare-chocs (8) des véhicules stationnés, ou bien le sol au niveau de la file de stationnement en l'absence de véhicule stationné.

**6.** Dispositif de mesure selon l'une quelconque des revendications précédentes, **caractérisé en ce que** le faisceau de mesure (7;10;11;12) est émis selon une orientation sensiblement perpendiculaire à l'axe longitudinal du véhicule équipé.

**Claims**

**1.** Device for measuring parking spaces intended to be fitted to an automotive vehicle (4), comprising a proximity sensor emitting a measuring beam in the direction of a line of parked vehicles (1) in order to detect the presence or the absence of a vehicle (1) at the side of the vehicle (4) equipped with the device, and an odometer coupled to said proximity sensor for measuring the length of a free space (6) separating two vehicles already parked, **characterised in that** the proximity sensor is arranged such as to emit at least one measuring beam (7; 10; 11; 12) directed towards the ground at the level of the line of parked vehicles, such that the beam intercepts the vehicle (1) in the case where a vehicle (1) is parked, or the ground when a parked car is absent, and **in that** the measuring beam emitted by the proximity sensor comprises a plurality of thin fixed beams (12) located substantially within a common vertical plane.

**2.** Device for measuring parking spaces intended to be fitted to an automotive vehicle (4), comprising a proximity sensor emitting a measuring beam in the direction of a line of parked vehicles (1) in order to detect the presence or the absence of a vehicle (1) at the side of the vehicle (4) equipped with the device, and an odometer coupled to said proximity sensor for measuring the length of a free space (6) separating two vehicles already parked, **characterised in that** the proximity sensor is arranged such as to emit at least one measuring beam (7; 10; 11; 12) directed towards the ground at the level of the line of parked vehicles, such that the beam intercepts the vehicle (1) in the case where a vehicle (1) is parked, or the ground when a parked car is absent, and **in that** the measuring beam emitted by the proximity sensor is a single thin beam (11) moving with a substantially vertical sweeping movement.

**3.** A measuring device according to one of claims 1 or 2, **characterised in that** the proximity sensor is placed high on the vehicle (4) equipped with the device, preferably at a height between 50 cm and 100 cm with respect to the ground.

**4.** Measuring device according to any preceding claim, **characterised in that** the proximity sensor is placed on at least one external rear view mirror (9) of the vehicle equipped with the device.

**5.** Measuring device according to any preceding claim, **characterised in that** the measuring beam (7; 10; 11; 12) is oriented towards the ground such as to intercept the bumpers (8) of parked vehicles or the ground at the level of the parking line in the absence of a parked vehicle.

**6.** Measuring device according to any preceding claim, **characterised in that** the measuring beam (7; 10; 11; 12) is emitted in an orientation substantially perpendicular to the longitudinal axis of the vehicle equipped with the device.

**Patentansprüche**

**1.** Vorrichtung zur Messung von Parklücken, die zur Ausstattung eines Kraftfahrzeugs (4) bestimmt ist, umfassend einen Näherungssensor, der ein Messbündel in Richtung auf eine Reihe geparkter Fahrzeuge (1) aussendet, um das Vorhandensein oder das Nichtvorhandensein eines Fahrzeugs (1) neben dem ausgestatteten Fahrzeug (4) festzustellen, und einen Kilometerzähler, der mit dem genannten Näherungssensor gekoppelt ist, um die Länge eines freien Platzes (6) zu messen, der zwei bereits geparkte Fahrzeuge trennt, **dadurch gekennzeichnet, dass** der Näherungssensor so gestaltet ist, dass er mindestens ein Messbündel (7; 10; 11; 12) aussendet, das auf den Boden im Bereich der Reihe der geparkten Fahrzeuge gerichtet ist, so dass das Bündel in dem Fall, dass ein Fahrzeug (1) geparkt ist, auf das Fahrzeug (1) oder bei Nichtvorhandensein eines geparkten Fahrzeugs auf den Boden trifft und dass das vom Näherungssensor ausgesendete Messbündel mehrere dünne, fixe Bündel (12) umfasst, die annähernd in der gleichen vertikalen Ebene angeordnet sind.

**2.** Vorrichtung zur Messung von Parklücken, die zur Ausstattung eines Kraftfahrzeugs (4) bestimmt ist, umfassend einen Näherungssensor, der ein Messbündel in Richtung auf eine Reihe geparkter Fahrzeuge (1) aussendet, um das Vorhandensein oder das Nichtvorhandensein eines Fahrzeugs (1) neben dem ausgestatteten Fahrzeug (4) festzustellen, und einen Kilometerzähler, der mit dem genannten Näherungssensor gekoppelt ist, um die Länge eines freien Platzes (6) zu messen, der zwei bereits geparkte Fahrzeuge trennt, **dadurch gekennzeichnet, dass** der Näherungssensor so gestaltet ist, dass er mindestens ein Messbündel (7; 10; 11; 12) aussendet, das auf den Boden im Bereich der Reihe der geparkten Fahrzeuge gerichtet ist, so dass das Bündel in dem Fall, dass ein Fahrzeug (1) geparkt ist, auf das Fahrzeug (1) oder bei Nichtvorhandensein eines geparkten Fahrzeugs auf den Boden trifft und dass das vom Näherungssensor ausgesendete Messbündel ein einziges dünnes Bündel (11) ist, das eine annähernd vertikale Abtastbewegung ausführt.

**3.** Messvorrichtung nach Anspruch 1 oder 2, **dadurch gekennzeichnet, dass** der Näherungssensor am ausgestatteten Fahrzeug (4) in der Höhe angeordnet ist, vorzugsweise in einer Höhe zwischen 50 cm und 100 cm in Bezug auf den Boden.

**4.** Messvorrichtung nach einem der vorhergehenden Ansprüche, **dadurch gekennzeichnet, dass** der Näherungssensor an mindestens einem Außenrückspiegel (9) des ausgestatteten Fahrzeugs angeordnet ist.

**5.** Messvorrichtung nach einem der vorhergehenden Ansprüche, **dadurch gekennzeichnet, dass** das Messbündel (7; 10; 11; 12) so auf den Boden gerichtet ist, dass es auf die Stoßstangen (8) der geparkten Fahrzeuge oder bei Nichtvorhandensein eines geparkten Fahrzeugs auf den Boden im Bereich der geparkten Reihe trifft.

**6.** Messvorrichtung nach einem der vorhergehenden Ansprüche, **dadurch gekennzeichnet, dass** das Messbündel (7; 10; 11; 12) auf annähernd senkrechte Weise zur Längsachse des ausgestatteten Fahrzeugs ausgesendet wird.

6
3
7
1
2
5
4
2
7
1
4
Dmax
L
Dmin
4
1
8
H
h
L
Dmin
4
9
1
H
$\alpha_1$
h
7

FIG.1

FIG.2

FIG.3

4
1
9
10
8
$\alpha_2$
$\alpha_1$

FIG.4

Dmax
4
1
9
11

FIG.5

Dmax
4
1
12

FIG.6

véhicule équipé à 30cm de la file de stationnement

600
500
400
300
200
100
0
distance(en cm)
détection du sol
18
19
détection d'un pare-chocs
62
64
66
68
70
72
74
76
78
80
α (en °)

FIG.7A

véhicule équipé à 150cm de la file de stationnement
600
500
400
300
200
100
0
distance(en cm)
20
détection du sol
21
détection d'un pare-chocs
62
64
66
68
70
72
74
76
78
80
α (en °)

FIG.7B

FIG.8
22
Début de la détection
23
Δ=0
24
oui
Dist1>s1
non
25
oui
Dist2>s2
non
26
oui
Dist3>s3
non
31
28
oui
Δ>S
non
incrémenter Δ
27
30
Afficher OK pour stationnement
29
Afficher emplacement trop petit

Distances en cm
700
600
500
400
300
200
100
0
distance capteur/sol
15
16
13
17
14
distance capteur/pare-chocs
50
60
70
80
90
100
110
120
130
Hauteur du capteur/sol en cm

FIG.9